# EUROPEAN PATENT APPLICATION

(11) **EP 2 466 666 A2**
(43) Date of publication of application: **20.06.2012**
(21) Application number: 12158364.5
(22) Date of filing: 10.06.2009
(51) Int. Cl.: H01M 2/06, H01M 2/26, H01M 2/30, H01M 10/04, H04B 15/02, H01M 10/0585, H01M 10/0583, H01M 2/02, H01M 10/0525

(54) **Battery for wireless mobile communication device**

(62) Divisional of application: 09845664.3
(71) Applicant: Research In Motion Limited, Waterloo, ON N2L 3W8 (CA)
(72) Inventor: Van Schyndel, Andre, John, Kanata, Ontario K2K 3K1 (CA); Hawker Larry, Edward, Waterloo, Ontario N2L 3W8 (CA); Mankaruse, George, Soliman, Waterloo, Ontario N2L 3W8 (CA)
(74) Representative: MERH-IP Matias Erny Reichl Hoffmann

(57) **Abstract**

A battery, comprising a case, an electrode assembly within the case, wherein the electrode assembly includes a positive electrode and a negative electrode, and positive and negative conductors electrically connected to the positive and negative electrodes, respectively, at a substantially similar point on the respective electrode assembly such that current flows in opposite directions through the positive and negative electrodes. The positive and negative conductors are closely routed so as to be aligned and in close proximity. As a result, magnetic fields generated by the positive and negative electrodes and the positive and negative conductors are substantially cancelled.

## Description

### Technical Field

The present disclosure relates generally to batteries and more particularly to a battery characterized by low magnetic interference and suitable for powering mobile communication devices.

### Background

Mobile communication devices are popular for business and personal use. Such devices include Personal Digital Assistants (PDAs), cellular phones and smart phones. These devices provide wireless two-way voice and data communication over wireless networks such as GSM/GPRS, CDPD, TDMA, iDEN Mobitex, DataTAC, EDGE or UMTS networks, and broadband networks like Bluetooth and variants of 802.11.

It is desirable that the electromagnetic fields generated by such devices be minimized for health reasons and in order to reduce interference with other nearby electronic devices. For example, international standards on Hearing Aid Compatibility (HAC) establish a minimum signal-to-noise ratio at the T-coil of a hearing aid (for example, see section 7.3.4 "Signal Quality" of ANSI C63.19-2007) for effective magnetic wireless coupling to the hearing aid (including hearing aids, cochlear implants, and assistive listening devices) while minimizing magnetic interference. Traditional approaches to meeting the required signal-to-noise ratio in the presence of magnetic fields generated by mobile communication devices include increasing current at the mobile communication device, installing a separate T-coil within the mobile communication device, and altering current loops and circuit board traces within the mobile communication device to minimize magnetic interference.

### Brief Description of the Drawings

FIG. 1 is a block diagram illustrating a wireless mobile communication device in accordance with the present disclosure;

FIG. 2 is a perspective view of a conventional battery for powering the wireless mobile communication device of Figure 1;

FIG. 3A is a schematic representation of positive and negative electrodes of a prior art battery such as that shown in FIG. 2, in an un-rolled configuration;

FIG. 3B is a schematic representation of positive and negative electrodes of a prior art battery such as that shown in FIG. 2, in a rolled-up configuration;

FIG. 4 is a schematic representation of positive and negative contact pads of a prior art battery such as that shown in FIG. 2;

FIG. 5A is a schematic representation of positive and negative electrodes of a battery according to an exemplary embodiment, in an un-rolled configuration;

FIG. 5B is a schematic representation of the positive and negative electrodes of a battery of FIG. 5A, in a rolled-up configuration;

FIG. 5C is a schematic representation of positive and negative electrodes of a battery according to a further exemplary embodiment, in an un-rolled configuration;

FIG. 5D is a schematic representation of the positive and negative electrodes of a battery of FIG. 5C, in a rolled-up configuration;

FIG. 5E is a schematic representation of the positive and negative electrodes of a battery according to an alternative embodiment, in a folded configuration;

FIG. 5F is a schematic representation of the positive and negative electrodes of a battery according to a further alternative embodiment, in a stacked configuration;

FIG. 6 is a schematic representation of positive and negative electrode tab connection from inside to outside of a battery case including an insulated feed-through, according to the embodiments of FIGS. 5A - 5D;

FIG. 7 is a schematic representation of positive and negative external wiring connections to contact pads of an exemplary battery such as that shown in FIGS. 5A - 5D;

FIG. 8 is a detail of the positive and negative external wiring connections shown in FIG. 7; and

FIG. 9 is a schematic representation of an alternative positive and negative external wiring connection to contact pads of the exemplary battery such as that shown in FIGS. 5A - 5D.

FIG. 10 is a schematic representation of an alternative positive and negative external wiring connection to contact pads that are closely spaced.

### Detailed Description

Magnetic noise may be generated by a battery of a mobile communication device due to current draw associated with GSM radio transmission. Accordingly, it is desirable to minimize magnetic interference from mobile communication devices in general and to minimize magnetic interference from mobile communication device batteries due to current draw on the battery.

According to an aspect of this specification, there is provided an apparatus for providing electrical power, comprising a positive electrode; a negative electrode separated from the positive electrode by at least one layer of electrolyte; a first conductor connected to the positive electrode at a first connection point; and a second conductor connected to the negative electrode at a second connection point; wherein the first connection point and the second connection point are at substantially similar locations on the respective positive electrode and the negative electrode.

According to another aspect, there is provided an apparatus for providing electrical power, comprising a positive electrode; a negative electrode separated form the positive electrode by at least one layer of electrolyte; a first conductor connected to the positive electrode at a first connection; and a second conductor connected to the negative electrode at a second connection; wherein the first connection and the second connection are substantially symmetric.

According to a further aspect of this specification, there is provided aAn apparatus for providing electrical power, comprising a positive electrode; a negative electrode separated form the positive electrode by at least one layer of electrolyte; a first conductor connected to the positive electrode; and a second conductor connected to the negative electrode; wherein the first conductor and the second conductor are closely routed.

According to yet another aspect of this specification, there is provided in a battery having internal current-carrying positive and negative electrodes electrically connected via respective tabs to positive and negative contact pads, the improvement comprising configuring said respective tabs symmetrically at the same position on said electrodes.

According yet a further aspect of this specification, there is provided in an apparatus for providing electrical power, comprising at least two electrodes separated by at least one layer of electrolyte; a case, wherein the electrodes are on an inside of the case; a first conductor connected to a first electrode of the at least two electrodes and to an inside part of the case; and a second conductor connected to an outside part of the case; wherein the first conductor and the second conductor are respectively connected to the inside of the case and the outside of the case at substantially similar points of the inside of the case and the outside of the case.

According to yet another aspect of this specification, there is provided in an apparatus for providing electrical power, comprising a positive electrode; a negative electrode separated form the positive electrode by at least one layer of electrolyte; a case, wherein the positive electrode and the negative electrode are on an inside of the case; a first conductor connected to the positive electrode; and a second conductor connected to the negative electrode; wherein the respective portions of the first conductor and the second conductor located outside of the case are closely routed..

A discussion of the prior art and exemplary embodiments follow hereafter with reference to the drawings.

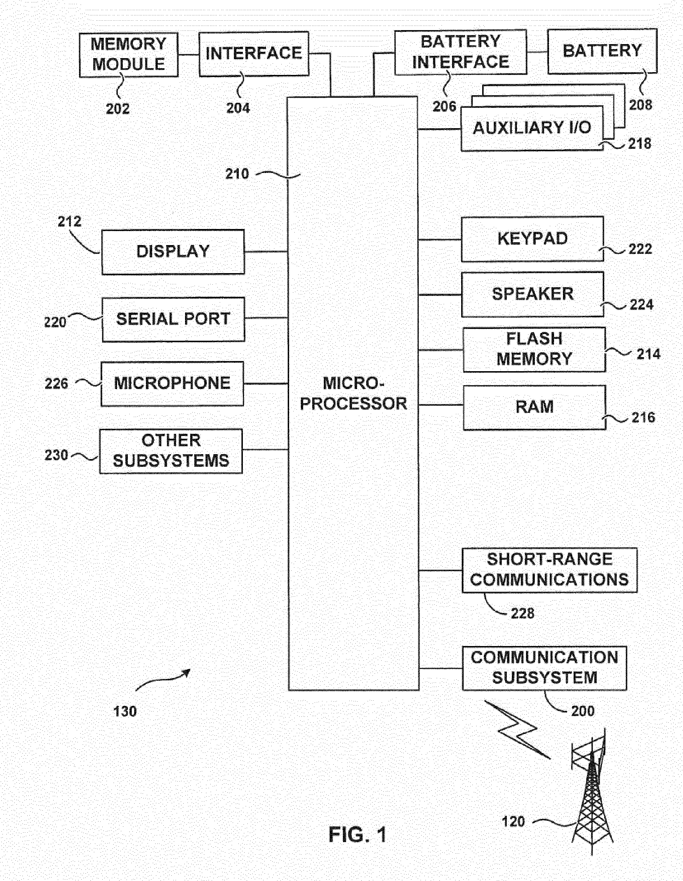

FIG. 1 is a block diagram illustrating some of the components of a wireless mobile communication device 130. In the embodiment depicted in FIG. 1, wireless mobile communication device 130 includes a communication subsystem 200 for wireless two-way data and voice communication with the wireless network 120. Communication subsystem 200 may include one or more receivers, transmitters, antennas, signal processors and other components associated with wireless communications. The particular design of the communication subsystem 200 can depend on the network in which the wireless mobile communication device 130 is intended to operate. The concepts herein may be applicable to a variety of wireless mobile communication devices, such as two-way pagers, cellular telephones, etc.

In the embodiment shown in FIG. 1, network access is associated with a subscriber or user of the wireless mobile communication device 130 via a memory module 202, which may be a Subscriber Identity Module (SIM) card for use in a GSM network or a Universal Subscriber Identity Module (USIM) card for use in a Universal Mobile Telecommunication System (UMTS). The SIM card is inserted in or connected to an interface 204 of the wireless mobile communication device 130 to operate in conjunction with the wireless network 120. Alternatively, the wireless mobile communication device 130 may have an integrated identity module for use with systems such as Code Division Multiple Access (CDMA) systems.

The wireless mobile communication device 130 also includes a battery interface 206 for receiving at least one rechargeable battery 208. The battery 208 provides electrical power to at least some of the electrical circuitry in the wireless mobile communication device 130, and the battery interface 206 provides a mechanical and electrical connection for the battery 208. As discussed above and in greater detail below, it has been discovered that when the mobile communication device 130 is held in close proximity to a hearing aid device (as is the case during normal cell phone usage) the time waveform (and frequency spectrum) of the Radio Frequency (RF) amplifier current within communication subsystem 200 is largely the same as that of the measured magnetic noise at the hearing aid coil. This indicates that interference problems with the hearing aid result from magnetic noise generated by currents within the communication system associated with GSM radio transmission. Through subsequent measurements and analysis, it was found that a large portion of this magnetic noise was generated by the battery.

The wireless mobile communication device 130 may include one or more circuit boards (not shown) that implement the components described above. This disclosure is not limited to any particular electronic component or software module or any combination thereof.

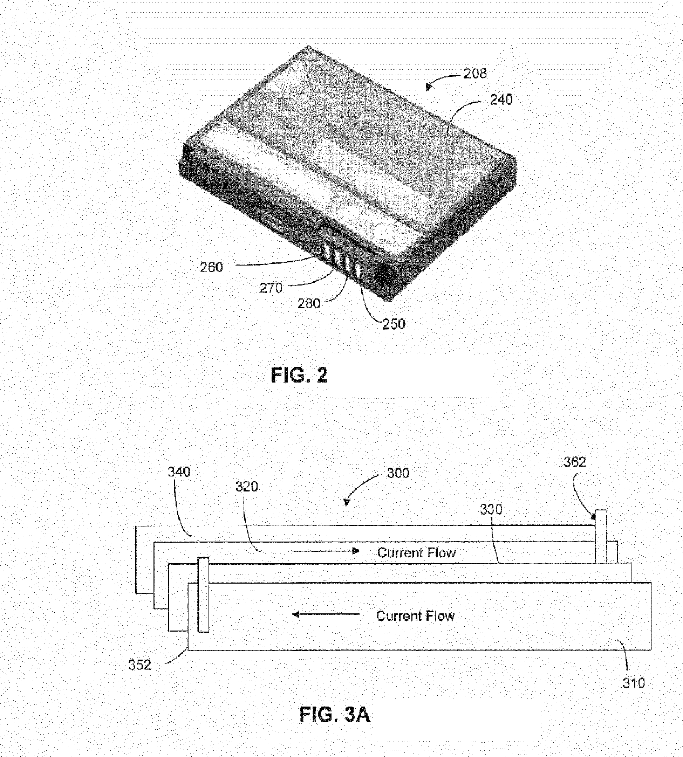

FIG. 2 shows a conventional battery 208 for powering a mobile communication device 130. The battery is assembled inside a case 240 and includes a positive contact pad 250, a negative contact pad 260, and may include a temperature contact pad 270 and a cryptography contact pad 280 for testing manufacturer's authenticity of the battery 208. Although not shown, the battery may include an internal microprocessor and a switch in series with the contact pads 250 and 260 which is opened by the internal microprocessor if the battery discharges below a predetermined level, in order to avoid damage to the battery. Likewise, if the battery temperature elevates beyond a predetermined level, as indicated on the temperature contact pad 270, the microprocessor may cause the switch to open.

A sandwich electrode assembly is located within the case 240, comprising coated metallic films that according to the most common configurations are either stacked, folded back and forth like an accordion (referred to as a Z-type electrode assembly), or rolled up and flattened (referred to as a "jellyroll" electrode assembly). Reference will be made hereinafter to the construction and design of "jellyroll" electrode assemblies, although a person of skill in the art will appreciate that the principles set forth herein apply equally to other designs and configurations of electrode assemblies.

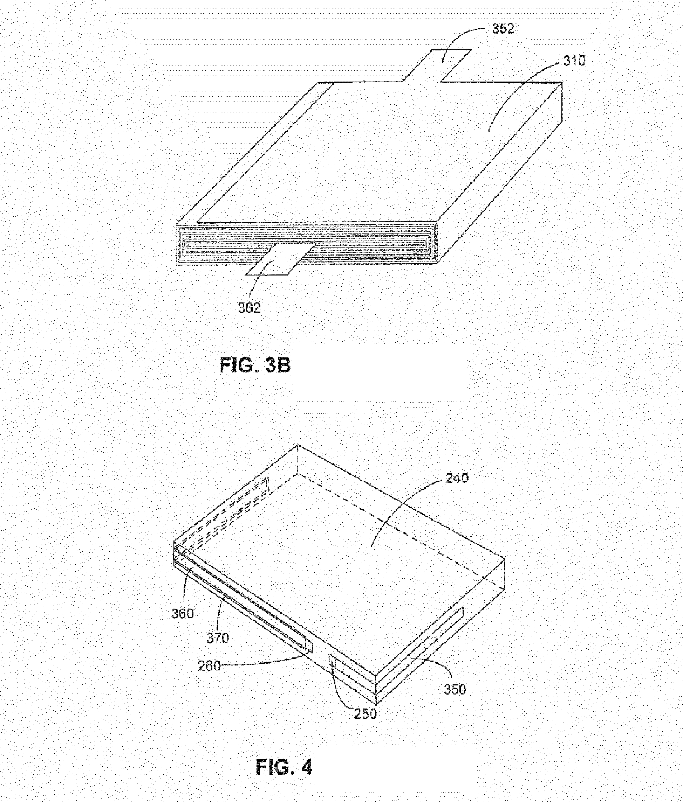

One such "jellyroll" electrode assembly 300 is schematically represented in FIG. 3A in its un-rolled state and in FIG. 3B in its final rolled-up state. The exemplary prior art electrode assembly 300 comprises a positive electrode sheet 310 (cathode) and a negative electrode sheet 320 (anode) sandwiched together with a separator sheet 330 between them, and a further outer separator sheet 340 that may curl around the end of the positive electrode sheet 310 at the innermost section of the jellyroll so as to completely isolate the positive and negative electrodes. The separator sheet 330 contains an electrolyte, such as lithium salts, such as LiPF6, LiBF4, or LiC104, in an organic solvent, such as ether. The electrolyte may also be acid such as in a lead-acid battery, alkaline electrolyte usually potassium hydroxide in a nickel metal hydride or nickel cadmium. The positive electrode sheet 310 may comprise a thin sheet of aluminum (e.g. 15µm) that is coated on both sides (e.g. 60-70µm per side) with Lithium cobalt oxide (LiCoO2), or other suitable material, while the negative electrode sheet 320 may comprise a thin sheet of copper foil (e.g. 10µm) that is coated on both sides with graphite (e.g. 60-70µm per side), such that electrical current flows from the cathode to the anode. The separator sheet 330 (e.g. 20 µm) has openings in it that allow the electrolyte liquid to permeate between the positive and negative electrode sheets 310 and 320. The separator sheet 330 thus physically separates the two electrode sheets while allowing ions to flow between them. Additional details of the construction of a conventional jellyroll electrode assembly may found in the prior art, as exemplified by US Patent 7,488,553 (Tsukamoto et al)

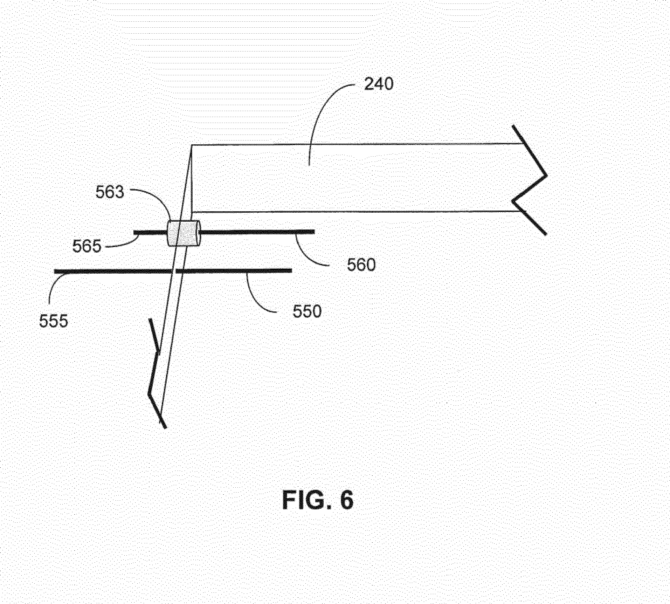

Electrical connection between the negative electrode sheet 320 and battery contact pad 260 may be made via a conducting tab 362 that extends to an insulated feed-through (for example, as discussed below and shown schematically in Figure 6) which connects to a conductive strip 360 that is insulated from the case by an insulator 370 and which extends from the feed-through to the battery contact pad 260, as shown in FIG. 4. Electrical connection between the positive electrode sheet 310 and battery contact pad 250 may be made either by leaving the aluminum electrode uncoated in its last roll of the jellyroll structure so as to expose the bare aluminum electrode and spot-welding, or crimping the last roll of the electrode 310 to the conductive case 240, or by spot-welding or crimping a conducting tab 352 to the case 240, thereby forming an external connection to the positive electrode through the case. A further conductive strip 350 may be spot-welded to an opposite side of the case from the spot-welded tab 352, or last roll of positive electrode sheet, which extends from the spot-weld on the case 240 to the battery contact pad 250, as shown in FIG. 4. In such an arrangement, the positive connection to outside of the case 240 is made on the opposite side of the battery case to the negative connection, as shown in FIG. 3B. However, it is also known in the art for the positive and negative connections to outside of the case 240 to be on the same side.

Power is typically provided from the battery 208 to a device, such as communication device 130, via conducting pads (260, 250), as discussed above. As shown in FIG. 4, a strip of conductor 350 carries the current from the conductive case 240 to the positive pad 250. The connection from the negative feed-through to conductive strip 360 is made on the opposite side of the battery from the positive connection. The conductive strip 360 carries the current from the feed-through to the negative pad 260. It will be appreciated that the arrangement of FIG. 4 results in large currents flowing externally of the battery case 240.

As shown in FIGS. 3A and 3B, if the connections 352 and 362 to the electrodes are made at opposite ends of the electrode assembly 300, i.e., one connection is made on the inside of the jellyroll and the other on the outside of the jellyroll, current flow within the positive and negative electrode sheets 310 and 320 is in the same direction. Moreover, the magnitude of the electrode current increases from zero at the end opposite the connection to maximum at the end with the connection. Therefore, the magnitude of the current in the two electrodes as a function of position is significantly different.

Sources of magnetic noise in the prior art battery design of FIGS. 3 and 4 include noise from the electric currents flowing in the jellyroll electrode assembly 300 and ion current in the electrolyte liquid, the connections from the electrodes 310, 320 to the feed-throughs, currents flowing in the battery case 240 and the external conductive strips 350, 360.

As discussed in detail below, magnetic noise may be significantly reduced (e.g. 25-30 dB reduction over the prior art) by adhering to one or more of the following battery design rules: (1) having current carrying connections to the positive and negative electrodes at the same relative point on the electrodes, (2) designing the connections to the positive and negative electrodes to be symmetric, (3) ensuring that the connections from the electrodes to the feed-throughs are closely routed, (4) ensuring that the positive and negative connections from the electrodes to/through the case are made at the same location inside and outside of the case, and (5) routing the external conductive strips so that magnetic fields generated by the currents in the positive and negative conductive strips cancel each other.

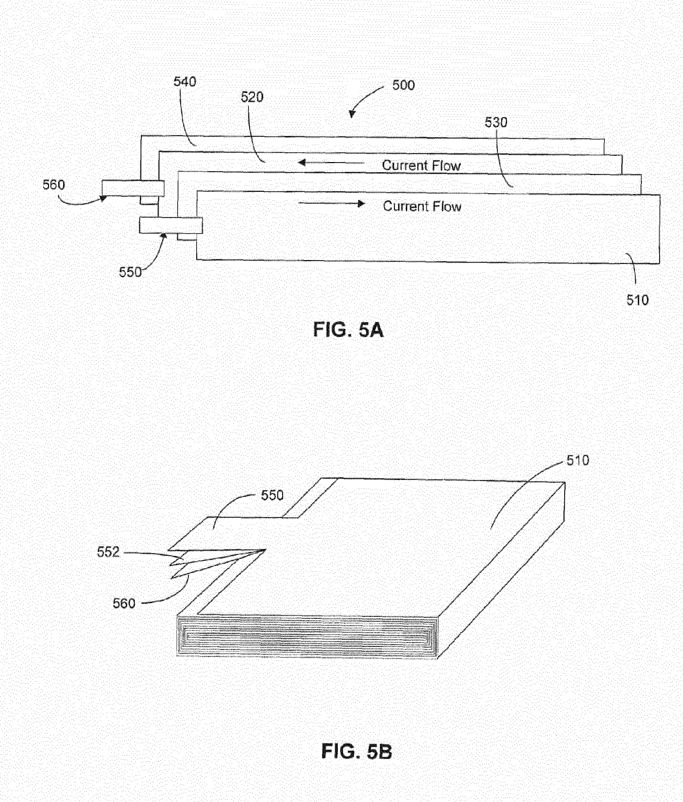

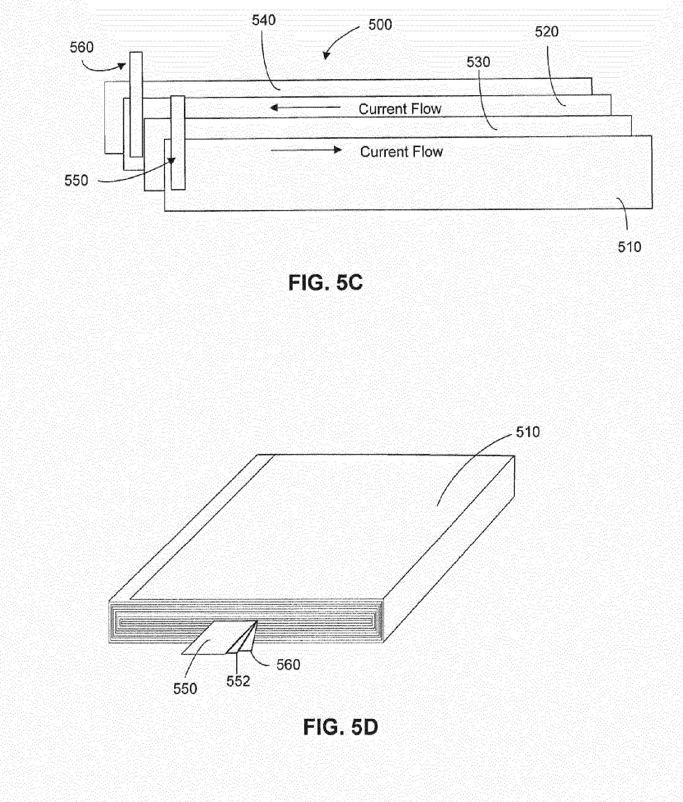

In accordance with the first design rule, an exemplary embodiment can have positive and negative tabs 550 and 560 connected to positive and negative electrodes 510 and 520, respectively, at the same point of the electrode assembly 500 with an insulator 552 between the positive and negative electrodes 510 and 520, as shown in FIG, 5B (wherein the tabs are located at a same outer end of the jellyroll assembly) or FIG. 5D (wherein the tabs are located at a same inner end of the jellyroll assembly). As a result, the currents in the electrodes 510 and 520 can flow in opposite directions. Moreover, the magnitude of the current in each of the electrodes (as a function of horizontal position in FIGS. 5A and 5C) can be virtually the same. In the final assembly, the electrodes 510 and 520 are preferably very close to each other (typically 150 microns) and the magnetic fields generated by the opposing currents cancel each other out.

. In alternative embodiments, the positive and negative tabs may be connected to the respective positive and negative electrodes at any point along the jellyroll. As an example, the positive and negative tabs may be connected at mid points of the respective positive and negative electrodes in the jellyroll. Further alternatives could have the positive and negative tabs at a point that is one third the length of the jellyroll or any other fraction of the length of the jellyroll.

In accordance with the second design rule, tabs 550 and 560 are symmetrical in that they both protrude from the same side of the jellyroll, are at the same angle with respect to the jellyroll, and are both the same size.

In accordance with the third and fourth design rules, the magnetic field resulting from the currents inside the battery case can be reduced even further by closely routing the conductors that carry the current from jellyroll to the case. As shown in FIG. 6 with the positive and negative tabs 550 and 560 being closely routed on both the inside and outside of case 240.

In accordance with the fourth design rule, any connection through the case is at a same location inside and outside of the case. As shown in FIG 6, positive tab 550 can be connected (e.g., via spot welding) to the same relative spot on the inside of case 240 that strip 555 is connected to on the outside of case 240. Similarly, negative tab 560 is connected through the case 240 via insulated feed-through 563 to strip 565 at the same relative spots inside and outside of the case 240 which can reduce current flowing in the case 240, as shown in FIG. 6. As discussed above, a feed-through connector may not be required for the positive electrode where the battery case 240 functions as a conductor, in which case the tab 550 can be connected to the case. Likewise, in some battery designs the negative electrode can be connected to the case, or feed-throughs may be used for both the positive and negative electrode tabs.

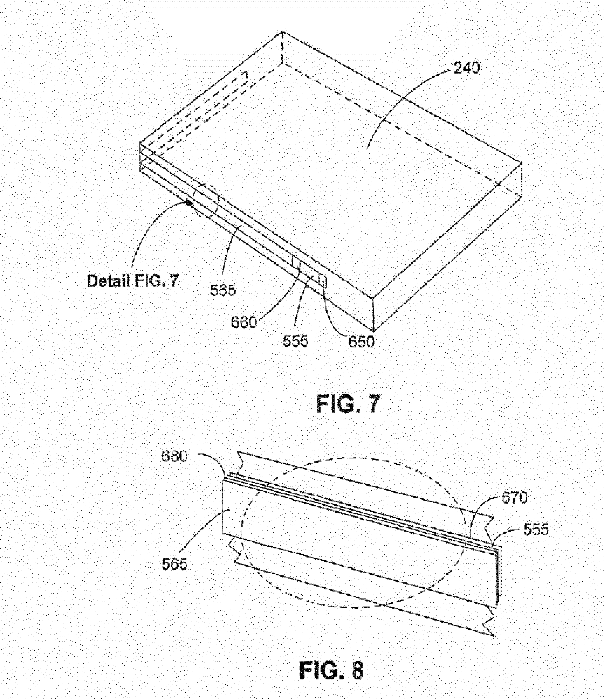

In accordance with the fifth design rule, the external wiring provided by conductive strips 555 and 565 is preferably routed so as to cancel magnetic fields generated by current flowing in the positive and negative portions thereof. Thus, as shown in FIGS. 7 and 8, the positive and negative conducting strips from the connections through the case to the contact pads 650 and 660 overlap so as to be aligned and in very close proximity. In the exemplary embodiment of FIG. 7, the negative strip 565 overlaps the positive conducting strip 555, with an insulator strip 670 separating the positive strip 555 from the battery case 240, and a further an insulator strip 680 separating the positive and negative strips. The positive strip 555 can be spot welded to the battery case and the negative strip 565 can be spot welded to the negative feed-through connector.

As discussed above, a reduction in magnetic noise can be achieved by adhering to one or more of the design rules. Therefore, whereas optimal noise reduction is achieved through adherence to all of the design rules, significant noise reduction can be achieved when fewer than all of the design rules are adhered to. Thus, in an alternative embodiment, the connections to the battery electrodes may be made at the same end, but not the same position. In particular, connections from the positive electrode 510 may be made to the case by leaving the aluminum electrode uncoated in its last roll on the jellyroll and spot-welding the exposed bare aluminum electrode to the conducting case 240 so as to form an external connection to the positive electrode through the case. In this arrangement, most of the current from the positive electrode 510 can be connected to the case 240 at the opposite end of the battery to the negative feed-through such that current flows from the last layer of negative electrode to the negative feed-through unmatched by an opposite current flowing in the positive electrode. According to this alternative embodiment, the field due to the last layer of negative current flowing in the electrode of a conventional battery such as depicted in FIGS. 2 - 4, can be reduced by making the positive connection to the battery case 240 in close proximity to the negative feed-through, as shown in FIG. 7. This results in current flowing through the battery case 240 that approximately matches that in the last layer of negative current flowing in the outer roll of the electrode assembly, but with opposite direction.

Moreover, the field due to the conducting strip 360 connecting the negative feed-through with the pad 260 in the conventional battery of FIGS. 2 - 4, is largely eliminated by adherence only to the fifth design rule, (i.e. locating the positive conducting strip 555 in close proximity with the negative connecting strip 565 all the way from the electrode connecting tabs to the contact pads 650 and 660, as shown in FIGS. 7 and 8).

Further embodiments can have conductors that connect the positive and negative electrodes to the positive and negative pads be of any suitable design. For example, a pair of twisted or untwisted wires that are in close proximity to each other (but are separated and/or otherwise protected so as to avoid a short circuit) can be used to make the connection from the electrodes through the case and to the pads.

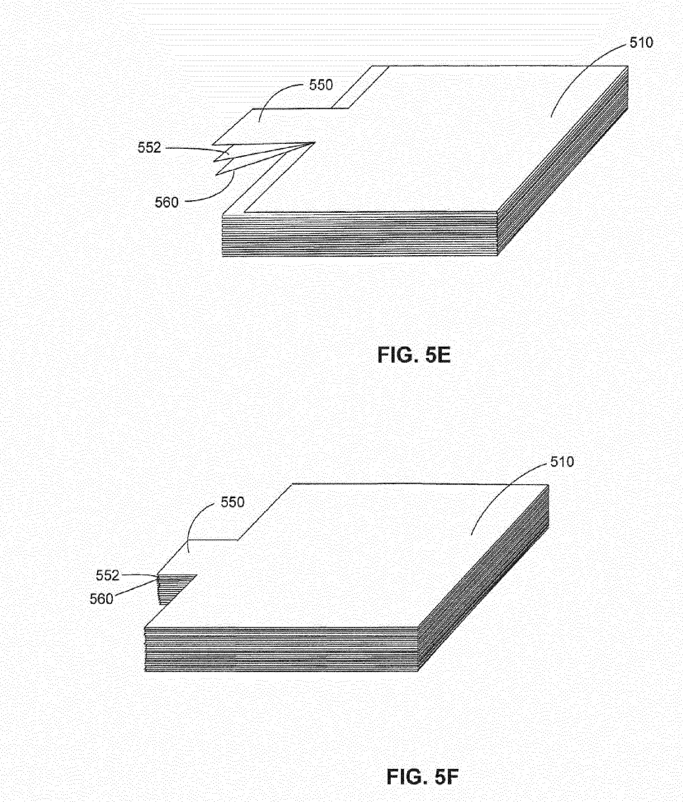

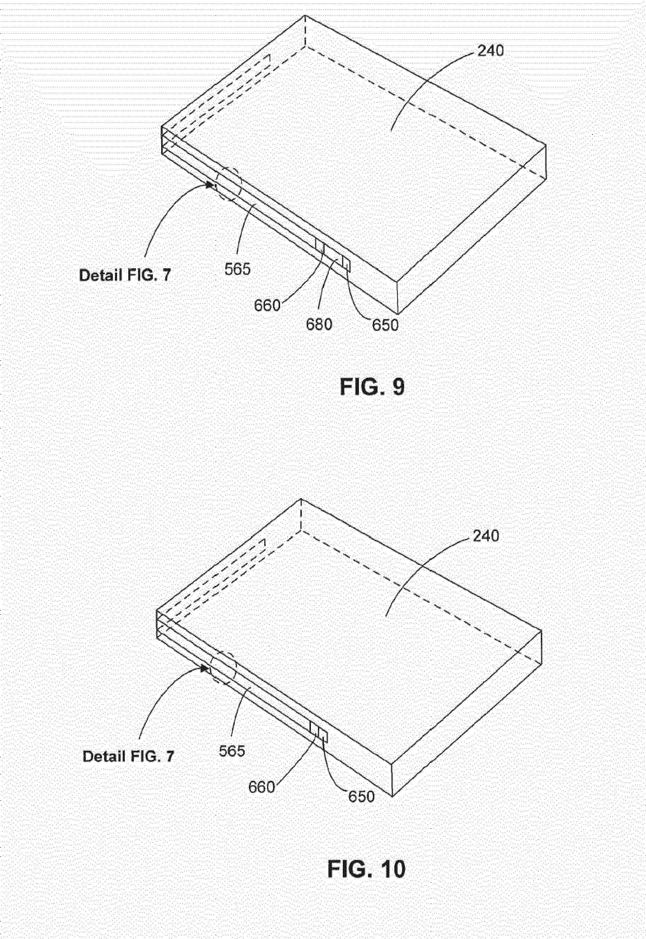

The embodiments set forth above are for illustration, and although one or more particular embodiments of the system and method have been described herein, changes and modifications may be made thereto. For example, as discussed above, additional configurations of sandwich electrode assembly 500 may include a Z-type electrode assembly as shown in FIG. 5E, or a stacked assembly as shown in FIG. 5F. Also, in the embodiment of FIG. 7, a portion of the positive conductive strip 555 and underlying insulator strip 670 are exposed between contacts 650 and 660. It is contemplated that the negative strip 565 and insulating strip 680 may be extended as shown in FIG. 9, to provide additional protection. Also, the current flowing through positive conductive strip 555 may be unmatched to current flowing through negative conductive strip 565 where positive conductive strip 555 extends past negative conductive strip 565 (as shown in FIGS. 7 and 9), which is the distance between pads 650 and 660. To reduce the amount of unmatched current (and magnetic noise), this distance between pads 650 and 660 should be minimized, so that pads 650 and 660 may be adjacent or closely spaced (as shown in FIG. 10), but still spaced sufficiently far apart to avoid a short circuit between the positive and negative electrodes that are electrically connected to terminal pads 650 and 660.

Additionally, whereas the above mentioned battery design rules are discussed in connection with battery conductors that carry high currents, a person of skill in the art will understand that other battery conductors and terminals that do not draw any significant current do not need to adhere to the above mentioned design rules. For example, if the current is a small fraction (e.g. one-thirtieth to one-fortieth of the current of the high-current carrying conductors and terminals) it is not necessary to apply the foregoing design rules to such battery conductors and terminals. Also, whereas an exemplary embodiment of lithium battery has been discussed above, the principles set forth herein apply to other batteries such as lithium ion polymer batteries, lithium ion prismatic batteries, lead acid batteries, nickel metal-hydride batteries, nickel cadmium batteries, alkaline batteries, or batteries yet to be designed.

Embodiments of the present invention may relate to one or more of the following enumerated example embodiments.
1. An apparatus for providing electrical power, comprising:
   a positive electrode;
   a negative electrode separated from the positive electrode by at least one layer of electrolyte;
   a first conductor connected to the positive electrode at a first connection point; and
   a second conductor connected to the negative electrode at a second connection point;
   wherein the first connection point and the second connection point are at substantially similar locations on the respective positive electrode and the negative electrode.
2. The apparatus of enumerated example embodiment 1, wherein the first conductor connected to the positive electrode is at a first connection, the second conductor connected to the negative electrode is at a second connection, and the first connection and the second connection are substantially symmetric.
3. The apparatus of enumerated example embodiment 1, wherein the first conductor and the second conductor are closely routed.
4. The apparatus of enumerated example embodiment 1, further comprising:
   a case, wherein the positive electrode and the negative electrode are on an inside of the case, and
   a third conductor connected to an outside part of the case at an outside connection point;
   wherein at least one of the first conductor or the second conductor is connected to an inside part of the case at an inside connection point, and the inside connection point and the outside connection point are respectively connected to the inside of the case and the outside of the case at substantially similar locations on the inside of the case and the outside of the case.
5. The apparatus of enumerated example embodiment 1, further comprising:
   a case, wherein the positive electrode and the negative electrode are on an inside of the case; and
   wherein respective portions of the first conductor and the second conductor are located outside of the case and are closely routed.
6. The apparatus of enumerated example embodiment 1, wherein the apparatus forms part of a battery that is one of a lithium ion polymer battery, a lithium ion prismatic battery, a lead acid battery, a nickel metal-hydride battery, a nickel cadmium battery, or an alkaline battery.
7. The apparatus of enumerated example embodiment 1, wherein a direction of electrical current flowing through the positive electrode is opposite from a direction of electrical current flowing through the negative electrode.
8. The apparatus of enumerated example embodiment 7, wherein a direction of electrical current flowing through the first conductor is opposite from a direction of electrical current flowing through the second conductor, such that magnetic fields caused by the apparatus are substantially cancelled.
10. The apparatus of enumerated example embodiment 1, wherein the positive electrode and the negative electrode form at least one of a roll, a z-type structure, or a stack.
11. The apparatus of enumerated example embodiment 1, wherein the first connection point is at a fraction of a length of the positive electrode and the second connection point is at a substantially same fraction of a length of the negative electrode.
12. The apparatus of enumerated example embodiment 1, further comprising:
   a first terminal pad electrically connected to the first conductor; and
   a second terminal pad electrically connected to the second conductor;
   wherein the first terminal pad and the second terminal are closely spaced so as to reduce unmatched currents flowing to the first terminal pad and the second terminal pad.
13. An apparatus for providing electrical power, comprising:
   a positive electrode;
   a negative electrode separated form the positive electrode by at least one layer of electrolyte;
   a first conductor connected to the positive electrode at a first connection; and
   a second conductor connected to the negative electrode at a second connection;
   wherein the first connection and the second connection are substantially symmetric.
14. The apparatus of enumerated example embodiment 13, wherein the first connection is at a first connection point, the second connection is at a second connection point, and the first connection point and the second connection point are at substantially similar locations on the respective positive electrode and the negative electrode.
15. The apparatus of enumerated example embodiment 13, wherein the first conductor and the second conductor are closely routed.
16. The apparatus of enumerated example embodiment 13, further comprising:
   a case, wherein the positive electrode and the negative electrode are on an inside of the case; and
   a third conductor connected to an outside part of the case at an outside connection point;
   wherein at least one of the first conductor or the second conductor is connected to an inside part of the case at an inside connection point and the inside connection point and the outside connection point are respectively connected to the inside of the case and the outside of the case at substantially similar locations on the inside of the case and the outside of the case.
17. The apparatus of enumerated example embodiment 13, further comprising:
   a case, wherein the positive electrode and the negative electrode are on an inside of the case; and
   wherein respective portions of the first conductor and the second conductor are located outside of the case and are closely routed.
18. An apparatus for providing electrical power, comprising:
   a positive electrode;
   a negative electrode separated form the positive electrode by at least one layer of electrolyte;
   a first conductor connected to the positive electrode; and
   a second conductor connected to the negative electrode;
   wherein the first conductor and the second conductor are closely routed.
19. The apparatus of enumerated example embodiment 18, wherein the first conductor is connected to the positive electrode at a first connection point, the second conductor is connected to the negative electrode at a second connection point, and the first connection point and the second connection point are at substantially similar locations on the respective positive electrode and the negative electrode..
20. The apparatus of enumerated example embodiment 18, wherein the first conductor connected to the positive electrode is at a first connection, the second conductor connected to the negative electrode is at a second connection, and the first connection and the second connection are substantially symmetric.
21. The apparatus of enumerated example embodiment 18, further comprising:
   a case, wherein the positive electrode and the negative electrode are on an inside of the case; and
   a third conductor connected to an outside part of the case at an outside connection point;
   wherein at least one of the first conductor or the second conductor is connected to an inside part of the case at an inside connection point and the inside connection point and the outside connection point are respectively connected to the inside of the case and the outside of the case at substantially similar locations on the inside of the case and the outside of the case.
22. The apparatus of enumerated example embodiment 18, further comprising:
   a case, wherein the positive electrode and the negative electrode are on an inside of the case; and
   wherein respective portions of the first conductor and the second conductor located outside of the case are closely routed.
23. An apparatus for providing electrical power, comprising:
   at least two electrodes separated by at least one layer of electrolyte;
   a case, wherein the electrodes are on an inside of the case;
   a first conductor connected to a first electrode of the at least two electrodes and to an inside part of the case; and
   a second conductor connected to an outside part of the case;
   wherein the first conductor and the second conductor are respectively connected to the inside of the case and the outside of the case at substantially similar points of the inside of the case and the outside of the case.
24. The apparatus of enumerated example embodiment 23, wherein the first conductor is connected to a first electrode of the at least two electrodes at a first connection point, a third conductor is connected to a second electrode of the at least two electrodes at a second connection point, and the first connection point and the second connection point are at substantially similar locations on the respective first electrode and the second electrode.
25. The apparatus of enumerated example embodiment 23, wherein the first conductor is connected to a first electrode of the at least two electrodes at a first connection, a third conductor is connected to a second electrode of the at least two electrodes at a second connection, and the first connection and the second connection are substantially symmetric.
26. The apparatus of enumerated example embodiment 23, further comprising:
   a third conductor connected to a second electrode of the at least two electrodes;
   wherein the first conductor and the third conductor are closely routed.
27. The apparatus of enumerated example embodiment 23, further comprising:
   a third conductor connected to a second electrode of the at least two electrodes,
   wherein the respective portions of the second conductor and the third conductor located outside of the case are closely routed.
28. An apparatus for providing electrical power, comprising:
   a positive electrode;
   a negative electrode separated form the positive electrode by at least one layer of electrolyte;
   a case, wherein the positive electrode and the negative electrode are on an inside of the case;
   a first conductor connected to the positive electrode; and
   a second conductor connected to the negative electrode;
   wherein the respective portions of the first conductor and the second conductor located outside of the case are closely routed.
29. The apparatus of enumerated example embodiment 28, wherein the first conductor is connected to the positive electrode at a first connection point, the second conductor is connected to the negative electrode at a second connection point, and the first connection point and the second connection point are at substantially similar locations on the respective first electrode and the second electrode.
30. The apparatus of enumerated example embodiment 28, wherein the first conductor is connected to the positive electrode at a first connection, the second conductor is connected to the negative electrode at a second connection, and the first connection and the second connection are substantially symmetric.
31. The apparatus of enumerated example embodiment 28, wherein the first conductor and the second conductor are closely routed.
32. The apparatus of enumerated example embodiment 28, further comprising:
   a third conductor connected an outside part of the case at an outside connection point;
   wherein at least one of the first conductor or the second conductor is connected to an inside part of the case at an inside connection point, and the inside connection point and the outside connection point are at substantially similar locations on the inside of the case and the outside of the case.
33. The apparatus of enumerated example embodiment 28, wherein the respective portions of the first conductor and the second conductor located outside of the case are formed by conductive strips, and currents flowing through the conductive strips are in opposite directions so as to substantially cancel magnetic fields caused by the currents.

All such embodiments and applications are believed to be within the scope of this disclosure in its broadest aspects and as set forth in the following claims.

## Claims

1. An apparatus for providing electrical power, comprising:
a positive electrode;
a negative electrode separated from the positive electrode by at least one layer of electrolyte;
a first conductor connected to the positive electrode; and
a second conductor connected to the negative electrode;
wherein the first conductor and the second conductor are closely routed.

2. The apparatus of claim 1, wherein the first conductor is connected to the positive electrode at a first connection point, the second conductor is connected to the negative electrode at a second connection point, and the first connection point and the second connection point are at substantially similar locations on the respective positive electrode and the negative electrode..

3. The apparatus of claim 1, wherein the first conductor connected to the positive electrode is at a first connection, the second conductor connected to the negative electrode is at a second connection, and the first connection and the second connection are substantially symmetric.

4. The apparatus of claim 1, further comprising:
a case, wherein the positive electrode and the negative electrode are on an inside of the case; and
a third conductor connected to an outside part of the case at an outside connection point;
wherein at least one of the first conductor or the second conductor is connected to an inside part of the case at an inside connection point and the inside connection point and the outside connection point are respectively connected to the inside of the case and the outside of the case at substantially similar locations on the inside of the case and the outside of the case.

5. The apparatus of claim 1, further comprising:
a case, wherein the positive electrode and the negative electrode are on an inside of the case; and
wherein respective portions of the first conductor and the second conductor located outside of the case are closely routed.

6. The apparatus of claim1, further comprising:
a case, wherein the positive electrode and the negative electrode are on an inside of the case;
wherein the respective portions of the first conductor and the second conductor located outside of the case are closely routed.

7. The apparatus of claim 6, wherein the first conductor is connected to the positive electrode at a first connection point, the second conductor is connected to the negative electrode at a second connection point, and the first connection point and the second connection point are at substantially similar locations on the respective first electrode and the second electrode.

8. The apparatus of claim 6, wherein the first conductor is connected to the positive electrode at a first connection, the second conductor is connected to the negative electrode at a second connection, and the first connection and the second connection are substantially symmetric.

9. The apparatus of claim 6, wherein the first conductor and the second conductor are closely routed.

10. The apparatus of claim 6, further comprising:
a third conductor connected an outside part of the case at an outside connection point;
wherein at least one of the first conductor or the second conductor is connected to an inside part of the case at an inside connection point, and the inside connection point and the outside connection point are at substantially similar locations on the inside of the case and the outside of the case.

11. The apparatus of claim 6, wherein the respective portions of the first conductor and the second conductor located outside of the case are formed by conductive strips, and currents flowing through the conductive strips are in opposite directions so as to substantially cancel magnetic fields caused by the currents.

12. An apparatus for providing electrical power, comprising:
at least two electrodes separated by at least one layer of electrolyte;
a case, wherein the electrodes are on an inside of the case;
a first conductor connected to a first electrode of the at least two electrodes and to an inside part of the case; and
a second conductor connected to an outside part of the case;
wherein the first conductor and the second conductor are respectively connected to the inside of the case and the outside of the case at substantially similar points of the inside of the case and the outside of the case.

13. The apparatus of claim 12, wherein the first conductor is connected to a first electrode of the at least two electrodes at a first connection point, a third conductor is connected to a second electrode of the at least two electrodes at a second connection point, and the first connection point and the second connection point are at substantially similar locations on the respective first electrode and the second electrode.

14. The apparatus of claim 12, wherein the first conductor is connected to a first electrode of the at least two electrodes at a first connection, a third conductor is connected to a second electrode of the at least two electrodes at a second connection, and the first connection and the second connection are substantially symmetric.

15. The apparatus of claim 12, further comprising:
a third conductor connected to a second electrode of the at least two electrodes;
wherein the respective portions of the second conductor and the third conductor located outside of the case are closely routed.
